# EUROPÄISCHE PATENTSCHRIFT

(11) **EP 3 523 143 B1**
(45) Veröffentlichungstag und Bekanntmachung des Hinweises auf die Patenterteilung: **16.12.2020**
(21) Anmeldenummer: 17777033.6
(22) Anmeldetag: 28.09.2017
(51) Int. Cl.: B60C 23/04

(54) **VERFAHREN ZUM BETREIBEN EINES REIFENDRUCKÜBERWACHUNGSSYSTEMS**
METHOD FOR OPERATING A TYRE PRESSURE MONITORING SYSTEM
PROCÉDÉ PERMETTANT DE FAIRE FONCTIONNER UN SYSTÈME DE SURVEILLANCE DE PRESSION DE PNEUMATIQUE

(30) Priorität: 05.10.2016 DE 102016118830
(43) Veröffentlichungstag der Anmeldung: 14.08.2019
(73) Patentinhaber: Huf Baolong Electronics Bretten GmbH, 75015 Bretten (DE)
(72) Erfinder: WAGNER, Markus, 71638 Ludwigsburg (DE)
(74) Vertreter: Twelmeier Mommer & Partner
(86) Internationale Anmeldenummer: PCT/EP2017/074610
(87) Internationale Veröffentlichungsnummer: WO 2018/065286

(56) Entgegenhaltungen:
- EP-A1- 1 536 392
- JP-A- 2007 245 982
- US-A1- 2008 205 553
- US-A1- 2012 185 110
- US-B1- 6 580 364

## Beschreibung

Die Erfindung geht von einem Verfahren mit den im Oberbegriff des Anspruchs 1 angegebenen Merkmalen aus, wie es aus US 6 580 364 B1 bekannt ist. Ein ähnliches Verfahren ist aus EP 2 562 010 A1 bekannt.

Systeme zur Reifendrucküberwachung bestehen aus Reifendrucküberwachungseinheiten, die in oder an den Reifen eines Fahrzeugs montiert sind und Sensoren zur Messung von Druck und Temperatur enthalten, sowie einer zentralen Auswerteinheit, die von den Reifendrucküberwachungseinheiten empfangene Daten auswertet.

Reifendrucküberwachungseinheiten senden Reifendruckinformationen drahtlos in Form von Datentelegrammen aus, die mehrere definierte Abschnitte enthalten. Diese Datentelegramme enthalten jeweils eine Präambel, eine charakteristische Kennung der Reifendrucküberwachungseinheit, eine Druckinformation, eine Temperaturinformation, eventuell weiteren Reifeninformationen, etwa Informationen über die Raddrehung, sowie eine Postambel, die eine Prüfsumme der im Datentelegramm enthaltenen Bits enthält. Die charakteristische Kennung in einem solchen Datentelegramm identifiziert die Reifendrucküberwachungseinheit und ermöglicht der zentralen Auswerteeinheit, die in dem Datentelegramm enthaltenen Informationen einer Radposition des Fahrzeugs zuzuordnen, sowie Datentelegramme von Reifendrucküberwachungseinheiten anderer Fahrzeuge, die etwa bei dichtem Verkehr empfangen werden können, als solche zu erkennen und zu ignorieren. Die zentrale Auswerteeinheit kann die charakteristischen Kennungen der einzelnen Reifendrucküberwachungseinheiten bei jedem Fahrtbeginn den Radpositionen des Fahrzeugs selbsttätig zuordnen, beispielsweise mit einem aus der DE 10 2010 037 512 B4 Zuordnungsverfahren.

Die Sende- und Empfangsbedingungen hängen stark von der Drehwinkelposition des Rades ab, sodass immer wieder Datentelegramme nicht oder nur unvollständig empfangen werden. Um trotzdem eine zuverlässige Datenübertragung zu gewährleisten, werden Datentelegramme mit identischen Druckinformationen von Reifendrucküberwachungseinheiten typischerweise drei oder mehrmals in kurzem zeitlichen Abstand von beispielsweise einigen 10 Millisekunden als ein Telegrammpaket gesendet. Die Anzahl der Wiederholungen eines Datentelegramms wird bei herkömmlichen Systemen so gewählt, dass einerseits eine ausreichend hohe Wahrscheinlichkeit besteht, dass wenigstens eines der Datentelegramme eines solchen Pakets vollständig empfangen wird und andererseits die für das mehrfache Senden von Datentelegrammen erforderliche Energie für die Reifendrucküberwachungseinheit auf ein erträgliches Maß beschränkt bleibt. Die Anzahl der Wiederholungen der Datentelegramme mit gleicher Druckinformation beruht also auf einem Kompromiss zwischen Übertragungssicherheit einerseits und Energieverbrauch andererseits.

Wenn keines der Datentelegramme eines Pakets vollständig empfangen wird, liegen einer zentralen Auswerteeinheit keine Druckinformationen für den betreffenden Reifen vor, bis ein erneutes Paket von Datentelegrammen ausgesendet und empfangen wird.

Aufgabe der vorliegenden Erfindung ist es einen Weg aufzuzeigen, wie noch besser erreicht werden kann, dass einer zentralen Auswerteeinheit zuverlässig aktuelle Druckinformationen für die einzelnen Fahrzeugreifen vorliegen.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Während des Empfangs oder beim Aussenden eines Datentelegramms kann aus unterschiedlichsten Gründen eine Störung auftreten, so dass der Empfang abbricht und der zentralen Auswerteeinheit dann nur ein unvollständiges Datentelegramm vorliegt. Indem die Druckinformation vor der charakteristischen Kennung übertragen wird, ist bei einem erfindungsgemäßen Verfahren die Chance erhöht, dass das unvollständig übertragene Datentelegramm die Druckinformation enthält.

Die zentrale Auswerteeinheit kann ein Datentelegramm unter Umständen auch dann einem der Fahrzeugreifen zuordnen, wenn die Übertragung nach der Druckinformation abgebrochen ist und die charakteristische Kennung deshalb nicht oder nur unvollständig vorliegt.

Die charakteristische Kennung hat bei modernen Reifendrucküberwachungssystemen eine erheblich Länge von 3, 4 oder noch mehr Byte, damit jede Reifendrucküberwachungseinheit anhand ihrer charakteristischen Kennung von allen anderen Reifendrucküberwachungseinheiten auf der Welt unterschieden werden kann. Wenn die zentrale Auswerteeinheit eines Fahrzeugs die charakteristischen Kennungen der am Fahrzeug verbauten Reifendrucküberwachungseinheiten kennt und diese den einzelnen Radpositionen zugeordnet sind, genügt bereits ein Anfangsabschnitt der charakteristischen Kennung, um ein (unvollständiges) Datentelegramm mit großer Zuverlässigkeit einer der Reifendrucküberwachungseinheiten des Fahrzeugs zu zuordnen, da sich die charakteristischen Kennungen der Reifendrucküberwachungseinheiten eines Fahrzeugs in der Regel bereits in ihrem ersten Byte unterscheiden.

Um die Zuverlässigkeit der Zuordnung anhand einer unvollständigen charakteristischen Kennung zu erhöhen oder auch bei völlig fehlender charakteristischer Kennung eine Zuordnung vorzunehmen, kann die zentrale Auswerteeinheit vorhandene Reifendruckdaten oder Temperaturinformationen, die in vorangegangenen Datenpaketen für die einzelnen Fahrzeugreifen übermittelt wurden, oder sonstige ihr vorliegende Daten, beispielsweise von ABS-Sensoren oder dem Motorsteuergerät, verwenden. Die zentrale Auswerteeinheit nimmt eine Zuordnung bei einer unvollständigen oder fehlenden charakteristischen Kennung nur dann vor, wenn die in dem unvollständigen Datentelegramm enthaltenen Druckinformationen und gegebenenfalls Temperaturinformationen zu den sonstigen der zentralen Auswerteeinheit vorliegenden Druck- und Temperaturdaten der betreffenden Radposition passen.

Die Reifentemperatur ändert sich nämlich nur relativ langsam. Wenn die Temperatur um mehr als einen vorgegebenen Schwellenwert, der von der Zeit seit dem letzten der betreffenden Reifendrucküberwachungseinheit eindeutig zugeordneten Datentelegramm abhängen kann, von der Temperatur der betreffenden Reifendrucküberwachungseinheit abweicht, kann man davon ausgehen, dass das unvollständige Datentelegramm mit dieser Temperaturinformation zu einem anderen Reifen gehören muss, beispielsweise dem Reifen eines anderen Fahrzeugs, das sich zufällig in der Nähe befindet.

Bei der Auswertung der Druckinformation eines unvollständigen Datentelegramms kann die zentrale Auswerteeinheit davon ausgehen, dass zwar ein Druckabfall in einem Fahrzeugreifen jederzeit stattfinden kann, eine Druckerhöhung jedoch nur in seltenen Ausnahmefällen auftreten kann, nämlich wenn ein Fahrzeugreifen aufgepumpt wird oder sich dessen Temperatur erhöht. Ob ein Fahrzeug steht, also der Reifen gerade aufgepumpt werden kann, kann die zentrale Auswerteeinheit von anderen Komponenten des Fahrzeugs, etwa dem Motorsteuergerät, erfahren.

Mit dem erfindungsgemäßen Verfahren kann die zentrale Auswerteeinheit also mit einer größeren Wahrscheinlichkeit eine Druckinformation für einen Fahrzeugreifen erhalten, insbesondere auch dann, wenn wegen eines vorzeitiger Abbruchs eines Datentelegramms eine Druckinformation ohne charakteristische Kennung der betreffenden Reifendrucküberwachungseinheit vorliegt. Das erfindungsgemäße Verfahren ermöglicht es somit, auch mit kleineren Datenpaketen, also weniger Wiederholungen von Datentelegrammen mit identischer Druckinformation, einer zentralen Auswerteeinheit eine Druckinformation des betreffenden Reifens mit größerer Zuverlässigkeit bereitstellen.

Der zentralen Auswerteeinheit eines Reifendrucküberwachungssystems liegt nämlich wesentlich häufiger ein Anfangsabschnitt eines unvollständig übertragenen Datentelegramms vor als ein Endabschnitt eines unvollständig übertragenen Datentelegramms. Dies liegt daran, dass ohne den Einstellabschnitt am Anfang eines Datentelegramms ein zuverlässiger Empfang und eine Detektion der Bitfolge eines Datentelegrams in der Regel gar nicht möglich ist. Je früher deshalb in einem Datentelegramm die Druckinformation gesendet wird, desto größer ist die Wahrscheinlichkeit, dass die zentrale Auswerteeinheit die Druckinformation zumindest als unvollständiges Datentelegramm erhält. Bevorzugt wird deshalb die Druckinformation unmittelbar nach der Präambel eines Datentelegramms gesendet.

Eine vorteilhafte Weiterbildung der Erfindung sieht vor, dass die Temperaturinformation in einem Datentelegramm ebenfalls vor der charakteristischen Kennung der Reifendrucküberwachungseinheit gesendet wird. In einem solchen Datentelegramm wird also zuerst die Präambel gesendet, dann die Druckinformation und danach die Temperaturinformation. Mit der Aussendung der charakteristischen Kennung wird erst begonnen, nachdem in diesem Datentelegram sowohl die Druckinformation als auch die Temperaturinformation gesendet wurden.

Weitere Einzelheiten und Vorteile der Erfindung werden an Ausführungsbeispielen unter Bezugnahme auf die beigefügten Zeichnungen erläutert.
- Fig. 1: ein Beispiel eines erfindungsgemäßen Datentelegramms; und
- Fig. 2: ein weiteres Beispiel eines erfindungsgemäßen Datentelegramms

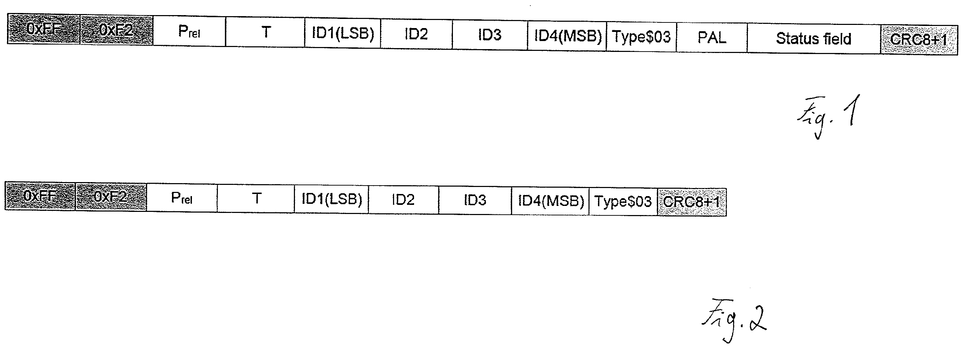

Die in den Figuren 1 und 2 dargestellten Datentelegramme enthalten jeweils eine Präambel, die eine Synchronisation von Empfänger und Sender ermöglicht, also eine Einstellung der Sende- und Empfangslevel. Die Präambel besteht bei den Ausführungsbeispielen der Figuren 1 und 2 aus den mit 0xFF und 0xF2 beschriebenen Feldern.

Unmittelbar nach der Präambel wird eine Druckinformation gesendet. Diese ist in Figur 1 und 2 durch das mit Pᵣₑₗ beschriftete Feld, üblicherweise ein Byte, gekennzeichnet. Bei der Druckinformation kann es sich beispielsweise um einen Messwert eines Drucksensors der Reifendrucküberwachungseinheit oder um einen Mittelwert von mehreren Druckmessungen handeln.

Nach der Druckinformation wird bei den gezeigten Ausführungsbeispielen eine Temperaturinformation gesendet. Dieses Feld ist in Figur 1 und 2 mit T bezeichnet. Nach der Temperatur wird dann die charakteristische Kennung der betreffenden Reifendrucküberwachungseinheit übertragen. In Figur 1 handelt es sich dabei um die Felder ID1, ID2, ID3 und ID4. Bei den gezeigten Ausführungsbeispielen hat die charakteristische Kennung also eine Länge von vier Byte. Es können aber auch kürzere oder längere charakteristische Kennungen verwendet werden.

Nach der charakteristischen Kennung kann in dem Datentelegramm dann eine Information enthalten sein, die den Typ des Datentelegramms angibt. In Figur 1 und 2 ist dieses Feld mit Type$03 beschriftet. Eine solche Typinformation kann in Reifendrucküberwachungssystemen verwendet werden, bei denen die Reifendrucküberwachungseinheiten unterschiedliche Datentelegramme aussenden können, beispielsweise kurze Datentelegramme, die nur Druck- und Temperaturinformationen enthalten, wie in Figur 2 gezeigt, oder auch längere Datentelegramme, die zusätzlich Informationen von Beschleunigungssensoren enthalten und deshalb Daten über Drehfrequenz und Drehrichtung des Rades enthalten, wie in Figur 1 gezeigt.

Das in Figur 1 dargestellten Beispielen eines Datentelegramms unterscheiden sich von dem in Figur 2 dargestellten Datentelegramm dadurch, dass dieses Datentelegramme zusätzlich Informationen von einem oder mehreren Beschleunigungssensoren der Reifendrucküberwachungseinrichtung enthalten, beispielsweise also Informationen über Drehfrequenz, Drehrichtung, Zentrifugal- und/oder Bahnbeschleunigung. Dazu kann das Datentelegramm ein Feld PAL (phase allocation array) enthalten, das angibt, in welcher Drehwinkelstellung sich der Reifen zu Beginn der Aussendung des Datentelegramms befunden hat. In einem daran anschließenden Feld (status field) kann dann eine Information über die Drehrichtung und Drehfrequenz bzw. Zentrifugal- und/oder Bahnbeschleunigung angegeben werden.

Am Ende eines Datentelegrammes wird eine Postambel gesendet, bei der es sich um eine Prüfsumme handelt. Üblicherweise wird bei derzeitigen Reifendrucküberwachungssystemen dazu eine zyklische Redundanzprüfung durchgeführt (CRC - cyclic redundancy check). Um erfindungsgemäße Datentelegramme von herkömmlichen Datentelegrammen zu unterscheiden, kann diese Prüfsumme bei einem erfindungsgemäßen Datentelegramm modifiziert werden, beispielsweise indem der Wert 1 oder eine andere natürliche Zahl zu der Prüfsumme addiert wird.

Wenn eines der in den Figuren dargestellten Datentelegramme von einer zentralen Auswerteeinheit unvollständig empfangen wird, kann eine Zuordnung des unvollständigen Datentelegramms zu einer der Reifendrucküberwachungseinheiten und damit zu einer der Radpositionen anhand einer unvollständigen charakteristischen Kennung erfolgen, da im Regelfall bereits eine unvollständige Kennung ausreicht, um die einzelnen Reifendrucküberwachungseinheiten des Fahrzeugs voneinander zu unterscheiden. Bevorzugt wird im Fall eines unvollständigen Datentelegramms eine Auswertung der Druckinformation und gegebenenfalls der Temperaturinformation durchgeführt, um festzustellen, zu welchen Reifendrucküberwachungseinheiten die betreffende Druck- bzw. Temperaturinformation passt. Auf diese Weise kann verhindert werden, dass unvollständige Datentelegramme von Reifendrucküberwachungseinheiten anderer Fahrzeuge fälschlicher Weise einer Reifendrucküberwachungseinheit des Fahrzeugs zugeordnet wird. Zudem lässt sich verhindern, dass fehlerhaft übertragene Druckinformationen berücksichtigt werden.

Um festzustellen, zu welchen Reifendrucküberwachungseinheiten ein unvollständig empfangenes Datentelegramm passt, verwendet die zentrale Auswerteeinheit vorliegende Druck- und Temperaturinformationen, die sie von Datentelegrammen erhalten hat, die sich eindeutig einer Reifendrucküberwachungseinheit zu ordnen ließen.

Dabei kann die zentrale Auswerteeinheit beispielsweise annehmen, dass sich die Temperatur einer Reifendrucküberwachungseinheit nur mit einer Rate ändern kann, für die ein Maximalwert vorgegeben ist. Die Temperaturinformation eines unvollständig empfangenen Datentelegramms passt also nur dann zu einer der Reifendrucküberwachungseinheiten des Fahrzeugs, wenn die betreffende Temperatur um weniger als einen definierten Schwellenwert, der sich aus dem Maximalwert der Rate und der Zeit seit dem Empfang des letzten Datentelegramms der betreffenden Reifendrucküberwachungseinheit berechnet, abweicht.

Alternativ oder zusätzlich kann die zentrale Auswerteeinheit beispielsweise auch annehmen, dass sich der Druck eines Reifens bei fahrendem Fahrzeug nur dann erhöhen kann, wenn sich auch die Temperatur erhöht.

## Patentansprüche

1. Verfahren zum Betreiben eines Reifendrucküberwachungssystems, das in oder an den Reifen eines Fahrzeugs montierte Reifendrucküberwachungseinheiten und eine zentrale Auswerteeinheit aufweist, wobei
Reifendaten von den Reifendrucküberwachungseinheiten jeweils in Form von Datentelegrammen gesendet werden, die eine Präambel (0xFF, 0xF2), eine Druckinformation (Prei), eine Temperaturinformation (T) und eine charakteristische Kennung (ID1, ID2, ID3, ID4) enthalten, und
die Druck- und Temperaturinformationen der Datentelegramme von der zentralen Auswerteeinheit jeweils einer Radposition an dem Fahrzeug zugeordnet werden,
wobei in den Datentelegrammen die Druckinformation (Pᵣₑₗ) jeweils vor der charakteristischen Kennung (ID1, ID2, ID3, ID4) gesendet wird,
**dadurch gekennzeichnet, dass**
die zentrale Auswerteeinheit unvollständig empfangene Datentelegramme auswertet und anhand einer unvollständigen charakteristischen Kennung (ID1) oder sonstigen ihr vorliegenden Daten einer Radposition zuordnet, und
die zentrale Auswerteeinheit bei der Zuordnung eines unvollständig empfangene Datentelegramms anhand von Druckinformationen anderer Datentelegramme, welche die zentrale Auswerteeinheit einer der Radpositionen des Fahrzeugs zugeordnet hat, überprüft, zu welchen Reifendrucküberwachungseinheiten die Druckinformation (Pᵣₑₗ) des unvollständig empfangenen Datentelegramms passt.

2. Verfahren nach Anspruch 1, **dadurch gekennzeichnet, dass** in den Datentelegrammen jeweils die Temperaturinformation (T) vor der charakteristischen Kennung (ID1, ID2, ID3, ID4) gesendet wird.

3. Verfahren nach einem der vorstehenden Ansprüche, **dadurch gekennzeichnet, dass** die Druckinformation (Pᵣₑₗ) in den Datentelegrammen jeweils vor der Temperaturinformation (T) gesendet wird.

4. Verfahren nach einem der vorstehenden Ansprüche, **dadurch gekennzeichnet, dass** in den Datentelegrammen jeweils nach der Druck- und Temperaturinformation eine Information über die Raddrehung gesendet wird.

5. Verfahren nach Anspruch 4, **dadurch gekennzeichnet, dass** in den Datentelegrammen die Information über die Raddrehung nach der charakteristischen Kennung (ID1, ID2, ID3, ID4) gesendet wird.

6. Verfahren nach einem der vorstehenden Ansprüche, **dadurch gekennzeichnet, dass** nacheinander jeweils wenigstens zwei Datentelegramme gesendet werden, welche dieselbe Druckinformation (Pᵣₑₗ) enthalten.

7. Verfahren nach Anspruch 6, **dadurch gekennzeichnet, dass** Datentelegramme, welche dieselbe Druckinformation (Pᵣₑₗ) enthalten, in einem Abstand von höchstens 300 ms, vorzugsweise höchstens 200 ms gesendet werden.

8. Verfahren nach einem der vorstehenden Ansprüche, **dadurch gekennzeichnet, dass** die Datentelegramme jeweils eine Prüfsumme enthalten, die nach der charakteristischen Kennung (ID1, ID2, ID3, ID4) gesendet wird.

## Claims

1. Method for operating a tyre pressure monitoring system which comprises tyre pressure monitoring units mounted in or on the tyres of a vehicle and a central evaluation unit, in which method
tyre data from the tyre pressure monitoring units is sent in the form of data telegrams containing a preamble (0xFF, 0xF2), pressure information (Pᵣₑₗ), temperature information (T) and a characteristic identifier (ID1, ID2, ID3, ID4), and
the pressure and temperature information of the data telegrams is assigned by the central evaluation unit to a wheel position on the vehicle,
the pressure information (Pᵣₑₗ) being sent in the data telegrams before the characteristic identifier (ID1, ID2, ID3, ID4),
**characterised in that** the central evaluation unit evaluates incompletely received data telegrams and assigns them to a wheel position on the basis of an incomplete characteristic identifier (ID1) or other data available to the central evaluation unit, and
the central evaluation unit, when assigning an incompletely received data telegram, uses pressure information of other data telegrams which the central evaluation unit has assigned to one of the wheel positions of the vehicle to check to which tyre pressure monitoring units the pressure information (Pᵣₑₗ) of the incompletely received data telegram belongs.

2. Method according to claim 1, **characterised in that** the temperature information (T) is sent in the data telegrams before the characteristic identifier (ID1, ID2, ID3, ID4).

3. Method according to any one of the preceding claims, **characterised in that** the pressure information (Pᵣₑₗ) is sent in the data telegrams before the temperature information (T).

4. Method according to any one of the preceding claims, **characterised in that** information regarding the wheel rotation is sent in the data telegrams after the pressure and temperature information.

5. Method according to claim 4, **characterised in that** the information regarding the wheel rotation is sent in the data telegrams after the characteristic identifier (ID1, ID2, ID3, ID4).

6. Method according to any one of the preceding claims, **characterised in that** in each case at least two data telegrams containing the same pressure information (Pᵣₑₗ) are sent in succession.

7. Method according to claim 6, **characterised in that** data telegrams containing the same pressure information (Pᵣₑₗ) are sent at an interval of at most 300 ms, preferably at most 200 ms.

8. Method according to any one of the preceding claims, **characterised in that** the data telegrams each contain a checksum which is sent after the characteristic identifier (ID1, ID2, ID3, ID4).

## Revendications

1. Procédé de mise en œuvre d'un système de surveillance de la pression des pneus qui présente des unités de surveillance de la pression des pneus montées sur les pneus d'un véhicule et une unité d'évaluation centrale, dans lequel
des données concernant les pneus sont envoyées des unités de surveillance de la pression des pneus respectivement sous la forme de télégrammes de données, qui contiennent un préambule (0xFF, 0xF2), une information de pression (Pᵣₑₗ), une information de température (T) et un identifiant caractéristique (ID1, ID2, ID3, ID4), et
les informations de pression et de température des télégrammes de données sont associées par l'unité d'évaluation respectivement à une position de roue sur le véhicule,
dans lequel l'information de pression (Pᵣₑₗ) est respectivement envoyée avant l'identifiant caractéristique (ID1, ID2, ID3, ID4) dans les télégrammes de données,
**caractérisé en ce que**
l'unité d'évaluation centrale évalue des télégrammes de données reçus incomplètement et associe à l'aide d'un identifiant caractéristique (ID1) incomplet ou d'autres données disponibles à une position de roue, et
l'unité d'évaluation centrale vérifie, lors de l'association d'un télégramme de données reçu incomplètement, à l'aide d'informations de pression d'autres télégrammes de données, lesquelles l'unité d'évaluation centrale a associées à une des position de roue du véhicule, à quelles unités de surveillance de la pression des pneus l'information de pression (Pᵣₑₗ) du télégramme de données reçu incomplètement correspond.

2. Procédé selon la revendication 1, **caractérisé en ce que** l'information de température (T) est envoyée avant l'identifiant caractéristique (ID1, ID2, ID3, ID4) dans les télégrammes de données.

3. Procédé selon l'une des revendications précédentes, **caractérisé en ce que** l'information de pression (Pᵣₑₗ) est envoyée avant l'information de température (T) dans les télégrammes de données.

4. Procédé selon l'une des revendications précédentes, **caractérisé en ce que** une information concernant la rotation de la roue est envoyée après l'information de pression et l'information de température dans les télégrammes de données.

5. Procédé selon la revendication 4, **caractérisé en ce que** l'information concernant la rotation de la roue est envoyée après l'identifiant caractéristique (ID1, ID2, ID3, ID4) dans les télégrammes de données.

6. Procédé selon l'une des revendications précédentes, **caractérisé en ce que** au moins deux télégrammes de données sont envoyés l'un après l'autre, lesquels contiennent la même information de pression (Pᵣₑₗ).

7. Procédé selon la revendication 6, **caractérisé en ce que** des télégrammes de données, lesquels contiennent la même information de pression (Pᵣₑₗ) sont envoyés dans un intervalle d'au plus 300 ms, de préférence d'au plus 200 ms.

8. Procédé selon l'une des revendications précédentes, **caractérisé en ce que** les télégrammes de données contiennent une somme de vérification qui est envoyée après l'identifiant caractéristique (ID1, ID2, ID3, ID4).
